# EUROPEAN PATENT APPLICATION

(11) **EP 0 919 815 A1**
(43) Date of publication of application: **02.06.1999**
(21) Application number: 98203732.7
(22) Date of filing: 03.11.1998
(51) Int. Cl.: G01P 13/04, G08G 1/056

(54) **Device and system for providing a warning in response to a motorist driving against the traffic**

(30) Priority: 04.11.1997 NL 1007437
(71) Applicant: Car Innovations B.V., 2661 CN Bergschenhoek (NL)
(72) Inventor: Bol, Frederikus Gerardus Maria, 2661 CN Bergschenhoek (NL)
(74) Representative: Beitsma, Gerhard Romano

(57) **Abstract**

The invention provides a device (1; 2, 3) and a system for warning road users of motorists driving against the traffic. To do this, the device comprises detection means (2) for determining the direction of travel (9) of a vehicle (8) using reflected radar waves (11) and warning means (3) for emitting a visual warning, preferably in the form of a symbol which lights up. In the event of a motorist driving against the traffic being detected, the detection means (2) emit an alarm signal which, depending on a passage detector, can be transmitted wirelessly to following warning signals (3') and/or to signalling posts (5) which are positioned along a road (6).

## Description

The invention relates to a device for providing a warning in response to a motorist driving against the traffic, and to a system in which a device of this kind is employed.

Motorists driving against the traffic, that is to say road users who drive onto a lane or carriageway which is intended for traffic travelling in the opposite direction, represent a significant danger to road safety. Particularly on motorways, this may have fatal consequences if a car driver or motorbike rider sees an exit as an entry slip road and tries to drive on in the opposite direction to the traffic.

Various proposals have been made for warning motorists who are (potentially) driving against the traffic in good time or even for making it impossible to drive on in the opposite direction at an exit. In practice, traffic signs indicating one-way traffic are frequently used. However, particularly at night and when conditions are misty, these signs are often overlooked. Other solutions offered are the arrangement of physical barriers which are formed, for example, by obstacles which are arranged in the roadway and yield in one direction of travel but damage the tyres of a vehicle travelling in the opposite direction. However, solutions of this nature are relatively expensive, since it is necessary to break up the road surface, and moreover cause unintentional damage to tyres. Furthermore, they represent a very considerable obstacle to emergency services such as the police and ambulance service.

German Patent Application DE 4,002,337 discloses a device for providing a warning in response to a motorist driving against the traffic, comprising: detection means for determining the direction of travel of a vehicle and emitting an alarm signal if the direction of travel determined in this way is the opposite direction to a prescribed direction of travel, first warning means for emitting a first visual warning in response to the alarm signal, as well as transmission means for transmitting the alarm signal to second warning means.

A device of this kind provides a relatively effective protection against motorists driving against the traffic. Due to the fact that firstly the direction of travel of a vehicle is determined and only then a visual warning is given as a function of an alarm signal, the warning is only given if there is actually a motorist driving against the traffic.

The second warning means, which are positioned at a distance from the device, provide an additional warning. The aim of this additional warning is to draw the attention of the motorist driving against the traffic to his/her mistake once again. This is efficient in particular if the motorist driving against the traffic has failed to notice the first warning means or at least has not reacted to them.

However, the known device has the drawback that the second warning means are always activated together with the first warning means, even if the motorist driving against the traffic reacts to the first warning means and immediately stops his/her vehicle. Activation of the second warning means always entails a visual warning, and possibly also an audible warning, which may be confusing to other road users, for example the users of an adjacent lane. Moreover, activation of the second warning means uses energy, which impairs the service life of any battery employed or the capacity of a rechargeable battery (accumulator).

The object of the invention is to eliminate the above and other drawbacks of the prior art and to provide a device and system which effectively combat the possibility of motorists driving against traffic without, however, emitting unnecessary warnings.

A further object of the invention is to provide a device and system which allow a low level of energy consumption by the second warning means.

To this end, the invention provides a device of the type mentioned above, which is characterized by additional detection means for determining whether the vehicle has passed the device and, as a function of this, transmitting the alarm signal to the second warning means.

In the device according to the invention, therefore, the second warning means are only activated if the motorist driving against the traffic has passed the device, or at least the additional detection means.

If the motorist driving against the traffic reacts immediately to the first warning means and stops his/her vehicle before reaching the additional detection means, the second warning means are not activated. This prevents the other road users from becoming confused, and also reduces the energy consumption of the device.

Advantageously, the warning means comprise a warning screen with a symbol arranged thereon, which warning screen is preferably formed by means of a matrix of lamps. The result is a warning which can immediately be recognized and is clearly visible.

Furthermore, the invention provides a system for warning road users of motorists driving against the traffic, comprising: at least one device of the type described above; second warning means for providing a visual warning; as well as further warning means for emitting a further visual warning in response to the alarm signal, in which system, in operation, the alarm signal is transmitted wirelessly, as a function of the additional detection means, from the at least one device to the further warning means, preferably by way of the second warning means.

Moreover, the invention provides a warning unit for use as second warning means in a system of the type mentioned above, provided with a passage detector for emitting a passage detection signal and transceiver means for transmitting a received alarm signal as a function of the passage detection signal. The invention also provides a detection post for use in conjunction with a warning unit of this kind.

The invention will be explained in more detail below with reference to the drawing, in which:
Fig. 1 shows a diagrammatic plan view of a section of road in which a system according to the invention is used;
Fig. 2 shows a diagrammatic, perspective view of a section of road which is provided with a device according to the invention;
Fig. 3 shows a front view of a preferred embodiment of a device according to the invention;
Fig. 4 diagrammatically shows the internal design of a device according to the invention;
Fig. 5 shows a signalling post for use in a system according to the invention;
Fig. 6 shows a perspective view of a detection post for use with a device and system according to the invention.

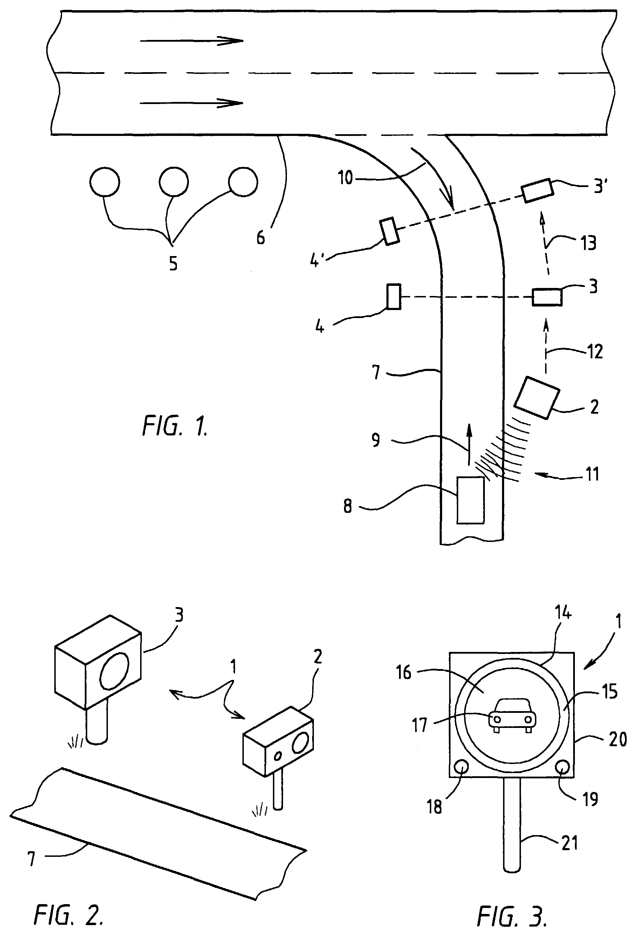

The carriageway 6 which is diagrammatically illustrated in Figure 1 has an exit slip road 7. A system for warning motorists driving against the traffic according to the invention is arranged along the carriageway 6 and the exit slip road 7. In the embodiment depicted, the system according to the invention comprises: a detection unit 2, warning units 3 and 3', detection posts 4 and 4', and signalling posts 5. The system operates as follows.

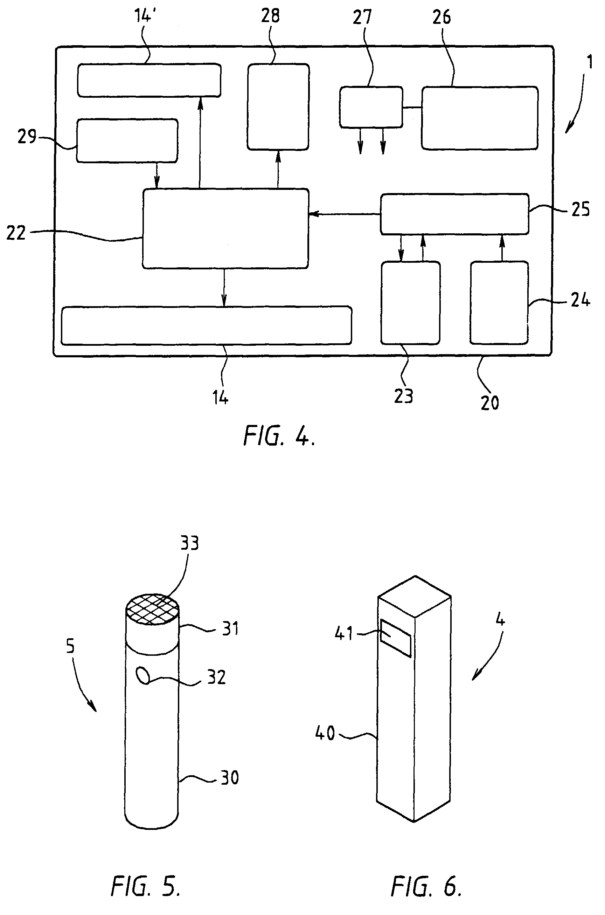

As can be seen in Fig. 1, a vehicle 8 which is moving in a direction of travel 9 (indicated by an arrow) is situated on the exit slip road 7. This direction of travel 9 is the opposite direction to the prescribed direction of travel 10 (also indicated by an arrow). It is necessary to prevent the vehicle 8 which is driving against the traffic from moving onto the carriageway 6. To do this, the detection unit 2 transmits pulses 11, which are preferably radar pulses. A vehicle 8 which is situated on the exit slip road 7 in the vicinity of the position illustrated will reflect these pulses. The detection unit 2 will receive the reflected pulses and, on the basis of differences in delay (Doppler effect), is able to determine the direction of travel of the vehicle 8. If this detected direction of travel is the opposite direction to the prescribed direction of travel 10, the detection unit 2 emits an alarm signal which, for example by means of infrared light (diagrammatically indicated in Fig. 1 by 12), is transmitted to the warning unit 3. This (first) warning unit (3) then emits a visual and/or acoustic warning, preferably by causing a warning sign or screen to light up. This will be explained in more detail below with reference to Figure 3. If necessary, the alarm signal is passed on by the warning unit 3, with the aid of infrared light (diagrammatically indicated in Figure 1 by 13), to the second or additional warning unit 3', which then also emits a warning. According to the invention, the alarm signal can be passed on to the additional warning unit 3' and to any further additional warning units 3' (not shown) selectively by making use of a passage detector, which detects whether the vehicle 8 has passed the relevant warning unit (3, 3'). For this purpose, in the embodiment illustrated, a detection post 4, 4' is positioned in the vicinity of each warning unit 3, 3', but on the opposite side of the exit slip road 7. A detection post 4, 4' of this nature is provided with a light reflector, as will be explained in more detail below with reference to Figure 6. This makes it possible to detect in a simple manner, by means of interruption to a light beam, as is used, for example, in lifts and alarm systems, whether the vehicle 8 has passed the relevant warning unit.

If the driver of the vehicle 8 ignores the warnings from the warning units 3 and 3' and drives past the final additional warning unit 3', the additional warning unit 3' activates signalling posts 5 which are positioned along the carriageway 6. Activation may also take place by means of the transmission of infrared light signals, but for the sake of simplicity of the drawing this is not shown in Fig. 1. The signalling posts 5 contain signalling lamps which warn users of the carriageway 6 of the presence of a motorist driving against the traffic. The design of the signalling posts 5 will be explained in more detail below with reference to Figure 5.

As has already been described above, the detection unit 2 firstly determines the direction of travel of the vehicle 8, after which the warning unit 3 (and possibly the additional warning unit 3') is activated. The signalling posts 5 may then also be activated.

Figure 2 shows the detection unit 2 and the warning unit 3 from Figure 1 in more detail. The detection unit 2 and the warning unit 3 are both arranged along the exit slip road 7 and together form a device 1 for providing a warning in response to a motorist driving against the traffic. Although in the example illustrated the detection unit 2 and the (first) warning unit 3 are accommodated in separate housings, it is entirely possible for them to be accommodated in a single housing.

Figure 3 shows a combined device 1 according to the invention. Both a detection unit and a warning unit are accommodated in the housing 20 of the device 1 illustrated. Openings 18 and 19 are provided for the purpose of transmitting and receiving detection pulses, such as radar pulses. If appropriate, a single combined opening may be used for these purposes. With the aid of a support post 21 which is to be positioned in the ground, the housing 20 of the device 1 can be arranged at a suitable height.

The device 1 provides a visual warning by means of a warning screen 14 with an outer ring 15, a panel 16 and a symbol 17. Preferably, the warning screen 14 is designed as a matrix of lamps, the ring 15 and the symbol 17 being composed, for example, of white lamps and the panel 16 of red lamps. Preferably, the warning is displayed in a flashing manner, in which case at least parts of the warning screen 14 (such as the panel 16) light up in pulsed fashion. Although it is possible to use text instead of or in addition to the symbol 17, it has been found that a symbol, such as the car illustrated, is understood earlier and more successfully.

It should be noted that the communication between the device 1 and the other parts of the system (such as one or more additional warning units 3' or the signalling posts 5) preferably takes place wirelessly (for example by means of infrared light signals). Furthermore, the device 1 is preferably provided with a solar panel, so that there is no need for a power supply. Consequently, there is no need to feed any wires through the post 21, allowing simple and inexpensive installation.

The diagram shown in Figure 4 illustrating a device 1 according to the invention comprises a warning screen 14, a control unit 22, a radar unit 23, an (optional) infrared receiver 24, a detector 25, a solar panel 26, an accumulator 27, an infrared transmitter 26 and a passage detector 29. The device 1 advantageously also comprises an additional warning screen 14'. The screen 14 may have the appearance illustrated in Figure 3 and is preferably composed of a matrix of, for example, a few hundred lamps, but may also comprise one or a few lamps and a number of coloured lens elements. The screen 14 is activated by the control unit 22, which may, for example, comprise a microprocessor and/or a suitable logic circuit. A radar unit 23 transmits and receives radar pulses (11 in Fig. 1) and, from these, determines the direction of travel of a vehicle. If appropriate, it is also possible to determine the speed of the vehicle. The optional infrared receiver 24 is able to receive infrared signals from an optional additional detection unit. Using signals emitted by the radar 23 or by the infrared receiver 24, the detector 25 determines whether it is necessary to emit an alarm signal. If a motorist driving against the traffic is detected, the detector 25 emits an alarm signal to the control unit 22, which then activates the screen 14. It is also possible to activate the additional screen 14', which is preferably arranged on the opposite side of the device 1 (rear of the housing 20). As a result, road users who are driving along the exit in the prescribed direction of travel are warned of the approaching vehicle travelling in the opposite direction. Moreover, the control unit 22 is able to emit a signal to the infrared transmitter 28 in order in this way to activate a further warning unit (3' in Figure 1).

The passage detector 29 preferably comprises a light source and a light-sensitive element. The light beam from the light source is reflected by a detection post (4 in Figure 1), allowing the passage of a vehicle to be detected. The passage detector 29 then emits a signal to the control unit 22, so that the infrared transmitter 28 can be activated selectively: the additional warning unit 3' is only activated if the vehicle 8 has passed the (first) warning unit 3. The activation of an additional (second) warning unit 3', or of signalling posts 5, may also be made dependent on a speed measurement of the vehicle 8 which is carried out by the detection unit 2.

Furthermore, an accumulator 27 is accommodated in the housing 20 of the device 1. Preferably, this accumulator 27 is connected to a solar panel 26, so that there is no need for any means of supplying electrical energy.

As can be seen from the above, the device according to the invention does not need any power supply cables. Moreover, the alarm signal, for example, is preferably transmitted wirelessly. The direction of travel of a vehicle is preferably also determined using radar without there being any need for cabling or pressure hoses in the roadway. The device according to the invention is therefore easy and inexpensive to install without impeding the flow of traffic, and it is easy to ensure the safety of the workers who instal the device.

The signalling post 5 shown in Figure 5 (cf. also Figure 1) comprises a body 30 and a signalling lamp 31. An infrared receiver 32 is provided for the purpose of receiving activation signals. The signalling post 5 preferably comprises a solar panel 33 and an accumulator (not shown), so that there is no need for any external provision of energy.

Figure 6 shows a detection post 4 for carrying out a passage detection in conjunction with the passage detector 29 shown in Figure 4. For this purpose, light reflector 41 is arranged on the body 40 of the post 4. This may be a light reflector which is known per se.

As has been described above, a detection unit 2 according to the invention transmits radar pulses in order to determine the direction of travel of a vehicle using the Doppler effect. Advantageously, a detection unit 2 may determine the direction of travel more than once and, for example, only emit an alarm signal if a first measurement and a second measurement are in agreement with one another. As an alternative to radar signals, it is possible, for example, to use acoustic or infrared pulses.

Infrared light is preferably used to transmit an alarm signal from a detection unit 2 to a (separately disposed) warning unit 3. However, it is also possible to employ radio signals for this purpose.

It will be understood by those skilled in the art that the invention is not limited to the embodiments which have been described above and that numerous modifications and additions are possible without departing from the scope of the invention.

## Claims

1. Device (1) for providing a warning in response to a motorist driving against the traffic, comprising:
- detection means (2) for determining the direction of travel of a vehicle (8) and emitting an alarm signal if the direction of travel (9) determined in this way is the opposite direction to a prescribed direction of travel (10),
- first warning means (3) for emitting a visual warning in response to the alarm signal, as well as transmission means (28) for transmitting the alarm signal to second warning means (3'),
characterized by
- additional detection means (29) for determining whether the vehicle (8) has passed the device (1) and, as a function of this, transmitting the alarm signal to the second warning means (3').

2. Device according to claim 1, in which the warning means (3) comprise a warning screen (14) with a symbol (17) arranged thereon, which warning screen (14) is preferably formed by means of a matrix of lamps.

3. Device according to claim 2, in which the warning means (3) comprise an additional warning screen (14'), the warning screen (14) and the additional warning screen (14') being arranged on opposite sides of the device (1).

4. Device according to claim 1, 2 or 3, in which the warning means (3) are also designed to emit an acoustic warning signal.

5. Device according to one of the preceding claims, in which the detection means (2) and the warning means (3) are accommodated in a single housing (20).

6. Device according to one of the preceding claims, in which the transmission means (28) are designed for the wireless transmission of the alarm signal.

7. Device according to one of the preceding claims, which is provided with a solar panel (26) and an associated accumulator (27).

8. Device according to one of the preceding claims, in which the detection means (2) are designed to determine the direction of travel of a vehicle (8) at least twice and to emit an alarm signal only if the direction of travel (9) determined in this way is each time the opposite direction to the prescribed direction of travel (10).

9. System for warning road users of motorists driving against the traffic, comprising:
- at least one device (1) according to one of the preceding claims,
- second warning means (3') for emitting a visual warning, as well as
- further warning means (5) for emitting a further visual warning in response to the alarm signal,
- in which system, in operation, the alarm signal is transmitted wirelessly, as a function of the additional detection means (29), from the at least one device (1) to the further warning means (5), preferably by way of the second warning means (3').

10. Warning unit (3) for use as second warning means in the system according to claim 9, provided with a passage detector for emitting a passage detection signal and transceiver means for transmitting a received alarm signal as a function of the passage detection signal.
